# EUROPÄISCHE PATENTSCHRIFT

(11) **EP 0 830 849 B1**
(45) Veröffentlichungstag und Bekanntmachung des Hinweises auf die Patenterteilung: **23.04.2003**
(21) Anmeldenummer: 97116559.2
(22) Anmeldetag: 23.09.1997
(51) Int. Cl.: A61C 1/14, B23B 31/10

(54) **Zahnärztliches Handstück mit Werkzeugaufnahmekopf**
Dental handpiece with tool-receiving head
Pièce à main dentaire comportant une tête porte-outils

(30) Priorität: 23.09.1996 DE 19638975
(43) Veröffentlichungstag der Anmeldung: 25.03.1998
(73) Patentinhaber: Sirona Dental Systems GmbH, 64625 Bensheim (DE)
(72) Erfinder: Bierbaum, Thomas, 64653 Lorsch (DE)
(74) Vertreter: Sommer, Peter

(56) Entgegenhaltungen:
- WO-A-94/15541
- DE-C- 101 636
- FR-A- 723 585

## Beschreibung

Die Erfindung betrifft ein zahnärztliches Handstück mit einem Werkzeugaufnahmekopf, der eine Vorrichtung zur Halterung und axialen Sicherung eines Werkzeuges in einer Aufnahmehülse des Werkzeugaufnahmekopfes enthält, entsprechend dem Oberbegriff des Patentanspruches 1.

Bei zahnärztlichen Werkzeugen mit zylindrischem Schaft ist es bekannt, das Werkzeug mit Hilfe federnder Spannzungen durch Reibschluß in einer Aufnahmehülse zu haltern. (DE-A1-36 44 055).

Bekannt sind außerdem zahnärztliche Werkzeuge, die ein abgeflachtes, zur Drehmomentübertragung mit einem mit der Aufnahmehülse mitlaufendem Mitnehmer in Eingriff bringbares und mit einer Ringnut versehenes Schaftende aufweisen. Zur Halterung und Sicherung des Werkzeuges sind ein oder mehrere, achsparallel zum Schaftende hin sich erstreckende und mit der Antriebswelle mitlaufende, in die Ringnut des Schaftes eingreifende Halteglieder vorgesehen. (DE-A1-30 12 152).

Den vorgenannten Spannsystemen gemeinsam ist, daß diese relativ aufwendig herzustellen sind und daß keine optische Kontrolle über den Rastzustand gegeben ist.

Aus der WO-A-94 15541 ist eine Halteeinrichtung für ein in ein Kopfgehäuse eines zahnärztliches Handstück einsetzbares Werkzeug bekannt, in dessen Einsteckende im Betriebszustand ein Halteteil eingreift, welches das Werkzeug festhält und welches zur Freigabe des Werkzeuges mittels eines am Kopfgehäuse angeordneten Druckknopfes in eine Freigabestellung bringbar ist. In dem Dokument werden zwei Versionen beschrieben, die eine ist für rotierende, die andere für in Vibration versetzbare Werkzeuge vorgesehen. Gemeinsam den beiden Versionen ist, dass das Halteteil aus einem einzigen, aus Federdraht geformten Federelement gebildet ist welches im Kopfgehäuse des Handstückes angeordnet ist. Bei der einen Version, die zur Halterung von rotierenden Werkzeugen vorgesehen ist, wie sie in der vorgenannten DE-A- 30 12 152 beschrieben sind, greifen am Federdraht angeordnete Halteteile in eine am Schaftende vorgesehene Ringnut ein. Eine Übertragung der Rotation bzw. des Drehmoments erfolgt über das abgeflachte Schaftende des Werkzeuges. Nachdem der Federdraht in einer mit dem abgeflachten Schaftende des Werkzeuges zusammenwirkenden Hülse eingebettet ist, nimmt das gesamte Halteteil an der Rotationsbewegung teil.

Bei der anderen Version wird das Werkzeug nicht mittels einer Ringnut am Werkzeug festgehalten; die Halteteile greifen vielmehr an einen Ringflansch des Werkzeuges an, in dem beim Einsetzen des Werkzeuges die Halteteile federnd über den Ringflansch geschoben werden und dann unter diesem rastend greifen. Auch hier dienen die Halteteile zur Übertragung der Bewegung vom Antrieb auf das Werkzeug.

In der DE-C-102 636 wird eine Vorrichtung beschrieben, die ein Lockerwerden eines Bohrers von Zahnbohrmaschinen bzw. ein Herausfallen des Bohrers aus einem Winkelstück nen bzw. ein Herausfallen des Bohrers aus einem Winkelstück verhindern soll. In dem Dokument wird von einer Schutzvorrichtung gesprochen, die in Form eines geschlitzten, gabelförmig ausgebildeten Schiebers außen am Winkelstück angebracht ist. Die beiden Gabelenden bilden eine Öffnung die etwas kleiner ist als der kegelförmig ausgebildete vordere Schaftende des Bohrers, so dass ein Herausfallen des Bohrers der zum hinteren Ende einen größer werdenden Schaftdurchmesser hat, verhindert wird.

In FR-A-723 585 ist ein zahnärztliches Winkelstück offenbart, welches zur Aufnahme von Werkzeugen mit abgeflachtem Schaftende geeignet ist. Ähnlich wie bei der in dem zuvor beschriebenen Dokument offenbarten Vorrichtung, ist auch hier ein Schieber vorgesehen. Der Schieber ist hier als Scheibe ausgeführt und enthält eine zentrale Bohrung die in eine Schlitznut übergeht, welche im Betriebszustand in eine Ringnut des Werkzeuges eingreift und dieses gegen Herausfallen sichert. Nachteilig ist bei dieser zur Aufnahme von Werkzeugen mit abgeflachtem Schaftende geeigneten Ausführung, dass zum Einführen und Herausnehmen des Bohrers der Schieber von Hand betätigt werden muß. Ein selbsttätiges Rasten und Entrasten ist damit nicht möglich.

Der im Anspruch 1 angegebenen Erfindung liegt die Aufgabe zugrunde, ein zahnärztliches Handstück der eingangs genannten Gattung, also mit einem Werkzeugaufnahmekopf welcher eine Aufnahmehülse aufweist, in der das Werkzeug zur Ausführung der beabsichtigten Bewegung kraftschlüssig gehalten wird, anzugeben, bei dem eine einfache und sichere Halterung des Werkzeuges auch dann gewährleistet ist, wenn die im Werkzeugaufnahmekopf vorgesehenen Haltemittel diese Halterung nicht gewährleisten sollten. Zum Rasten bzw. Entrasten soll vorteilhafterweise ein geringer Kraftaufwand erforderlich und der Rastzustand auch optisch erkennbar sein.

Bei der erfindungsgemäß vorgeschlagenen Vorrichtung weist der Werkzeugschaft am Umfang eine radiale Erhebung oder Vertiefung auf. Die Vorrichtung umfaßt als zweite Haltemittel wenigstens zwei in Nähe der Einführöffnung der Aufnahmehülse befestigbare, zueinander beabstandet angeordnete federnde Halteelemente, deren Abstand und Elastizität so bemessen ist, daß der Werkzeugschaft nach Einführen in die Aufnahmehülse durch Torsion und/oder Verbiegung der Halteelemente gehalten und gegen axiales Abgleiten gesichert ist.

Vorteilhafterweise ist der Haltemechanismus außen am Werkzeugaufnahmekopf angeordnet. Dadurch ist jederzeit eine optische Kontrolle über den Haltezustand möglich. Das zweite Haltemittel ist vorteilhafterweise haarnadelförmig ausgebildet, wobei die beiden freien Enden die Halteelemente bilden. Das zweite Haltemittel ist ferner vorteilhafterweise einteilig ausgebildet und kann durch Biegen aus einem Federdraht, vorzugsweise mit rundem Querschnitt, hergestellt werden.

Anhand der Zeichnung wird ein Ausführungsbeispiel der Erfindung näher erläutert. Es zeigen:
- Fig. 1: einen Teil eines zahnärztlichen Handstückes mit zwei unterschiedlichen Werkzeugen in schaubildlicher Darstellung,
- Fig. 2: einen Teil des in Fig. 1 dargestellten Handstückes im Längsschnitt ohne Werkzeug,
- Fig. 3: das Halteteil in einer Ansicht und
- Fig. 4: einen Ausschnitt der Werkzeughalterung im gerasteten Zustand

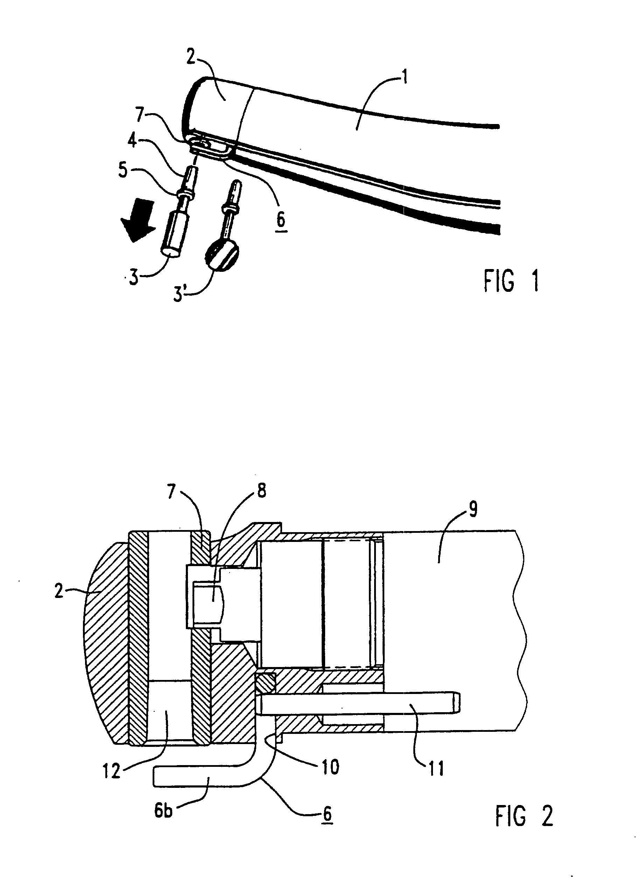

Die Fig. 1 zeigt in einer schaubildlichen Darstellung den vorderen Teil eines allgemein mit 1 bezeichneten zahnärztlichen Handstückes in dessen Kopfgehäuse 2 alternativ eines der mit 3, 3' bezeichneten Werkzeuge eingeführt werden kann. Die Werkzeuge 3, 3' dienen beispielsweise zum Verdichten von Amalgamfüllungen und führen im Gebrauch eine durch Pfeil angedeutete Schlagbewegung aus.

Der an sich zylindrisch ausgeführte Werkzeugschaft 4 ist in bekannter Weise in einer leicht konisch ausgebildeten Aufnahmenhülse 7 kraftschlüssig gehalten, und zwar so, daß das Werkzeug die oben erwähnte Bewegung ausführen kann. Diese Haltemittel bilden eine erste Halterung.

Wie ersichtlich, ist der Werkzeugschaft am Umfang mit einer radialen Erhebung, im Ausführungsbeispiel mit einem Ringbund 5, versehen. Der Ringbund 5 wirkt, wie nachfolgend noch näher erläutert, mit einem Halteteil 6 so zusammen, daß das Werkzeug 3 nach dem Einsetzen in eine im Kopfgehäuse 2 angeordnete Aufnahmehülse 7 rastend gegen axiales Herausgleiten gesichert ist. Diese Haltemittel bilden eine zweite Halterung, insbesondere Sicherung gegen axiales Abgleiten des Werkzeuges aus der Aufnahmehülse.

Die Fig. 2 zeigt den vorderen Teil des Handstückes mit dem Kopfgehäuse im Längsschnitt. Die Schlagbewegung wird mit Hilfe eines Vierkantzapfens 8 erzeugt, der sich am Ende einer in Rotation versetzbaren Triebwelle 9 befindet.

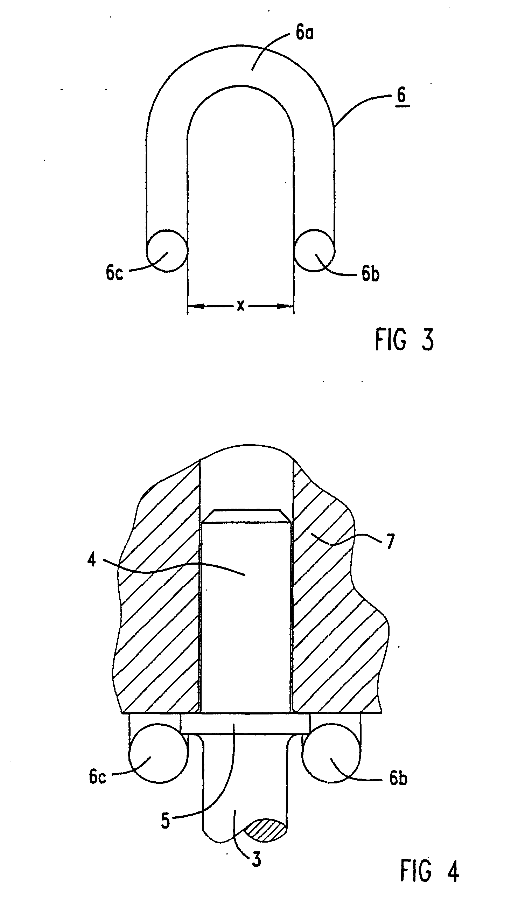

Das zweite Haltemittel 6 besteht aus einer haarnadelförmig gebogenen Klammer aus Federstahldraht die etwa auf halber Länge um 90° abgewinkelt ist. In Fig. 3 ist dieses Teil in einer Ansicht dargestellt. Das bügelförmige Ende 6a ist in eine entsprechende Ausnehmung 10 im Kopfgehäuse 2 eingesetzt und wird durch einen Querstift 11 gesichert. Die beiden freien Enden 6b, 6c sind in einem solchen Abstand (x) zueinander angeordnet, daß das Einführen des Schaftes in die leicht konisch ausgebildete Öffnung 12 der Aufnahmehülse 7 ermöglicht wird. Wie bereits erwähnt, wird im eingeschobenen Zustand das Werkzeug kraftschlüssig gehalten. Infolge der Elastizität, die die Elemente 6b, 6c aufweisen, werden diese beim Einführen des Werkzeuges durch den Ringbund 5 so weit aufgeweitet, bis schließlich das Werkzeug mit dem Ringbund 5 dahinter einrastet, wobei im eingerasteten Zustand der Ringbund 5 mit relativ geringem axialem Spiel zwischen Halteteil 6 und Aufnahmehülse 7 fixiert wird.

Die Anordnung kann, wie in Fig. 4 gezeigt, auch so getroffen sein, daß infolge der Federkraft der Werkzeugschaft spielfrei in der Aufnahmehülse 7 gehalten wird. Eine solche Anordnung kann mit Vorteil auch dazu benutzt werden, die Rückführung des Werkzeuges in die Ausgangslage zu bewirken, zumindest zu unterstützen.

Das Haltemittel 6 ist vorteilhafterweise ein Biegeteil aus Federstahldraht mit rundem Querschnitt. Die Verwendung eines solchen Drahtes hat den Vorteil, daß während des Rastvorganges ein günstiger, das Einführen erleichternder (relativ geringer) Kraftanstieg vorhanden ist. Ein weiterer Vorteil ist darin zu sehen, daß sich durch den runden Drahtquerschnitt eine günstige geometrische Einführhilfe für das zu rastende Werkzeug ergibt.

Die beiden Drahtenden 6b, 6c können gleichsam zur Winkelorientierung des einzurastenden Werkzeuges benutzt werden, indem beispielsweise der Werkzeugschaft und/oder der Ringbund mit nicht rotationssymmetrischen Positionierflächen (Nut oder dgl.)versehen wird.

Obgleich es vorteilhaft ist, wenn der Werkzeugschaft, wie dargestellt, mit einem Ringbund versehen ist, so liegt es im Rahmen der Erfindung, den Werkzeugschaft alternativ mit einer Einschnürung zu versehen. In diesem Falle ist der Abstand (x) der Drahtenden selbstverständlich enger zu halten, um eine ausreichende Fixierung des Werkzeuges zu erzielen.

Obgleich es fertigungstechnisch vorteilhaft ist, die radialen Erhebungen oder Vertiefungen rotationssymmetrisch auszubilden, sind auch nicht rotationssymmetrische Erhebungen bzw. Vertiefungen am Schaftumfang denkbar. Auch eine Anordnung von zwei in Schaftlängsrichtung nebeneinander liegenden Ringbünden bzw. Einschnürungen, zwischen denen die federnden Enden 6b, 6c des Halteteils 6 einrasten, liegt im Rahmen der Erfindung.

Im Rahmen der Erfindung liegt es, das zweite Haltemittel 6 innerhalb der beweglich geführten Aufnahmehülse (7) anzuordnen. Eine solche Anordnung kann beispielsweise vorteilhaft sein, wenn die Aufnahmehülse eine gesteuerte Hin- und Herbewegung ausführen soll oder wenn ein relativ großer Hub für das Werkzeug gefordert wird. Eine weitere vorteilhafte Anwendung einer solchen Lösung ist denkbar, wenn ein rotierender oder rotierend-oszillierender Antrieb für die Aufnahmehülse gefordert wird.

## Patentansprüche

1. Zahnärztliches Handstück mit einem Werkzeugaufnahmekopf (2), der eine Vorrichtung zur Halterung und axialen Sicherung eines Werkzeuges (3) in einer Aufnahmehülse (7) des Werkzeugaufnahmekopfes (2) enthält, wobei das Werkzeug (3) einen Schaft (4) aufweist, der der Einfuhröffnung (12) der Aufnahmehülse (7) zugewandt am Umfang mit einer radialen Erhebung oder Vertiefung versehen ist, und wobei die Vorrichtung ein erstes Haltemittel (7,12) für die zur Ausführung der beabsichtigten Bewegung kraftschlüssige Verbindung des Schaftes (4) im Werkzeugaufnahmekopf (2) und in der Nähe der Einführöffnung (12) ein zweites Haltemittel (6) zur Sicherung des Werkzeuges (3) gegen axiales Abgleiten aus dem Werkzeugaufnahmekopf (2) enthält,
wobei das zweite Haltemittel (6) wenigstens zwei zueinander beabstandet angeordnete federnde Halteelemente (6b, 6c) umfaßt, deren Abstand (x) so bemessen ist, dass der Werkzeugschaft (4) dazwischen einführbar und in die Aufnahmehülse (7) einschiebbar ist, dass die Elastizität der Halteelemente (6b, 6c) derart ist und wobei diese beim Einschieben des Werkzeugschaftes (4) aufweitbar sind, bis der Werkzeugschaft (4) im eingeschobenen Zustand hinter der radialen Erhebung (5) oder in der Vertiefung mit den Halteelementen (6b, 6c) verrastet, **dadurch gekennzeichnet, dass** die kraftschlüssige Verbindung mit der Aufnahmehülse (7) hergestellt ist, und dass die Elastizität der Halteelemente (6b, 6c) derart ist, dass die Verrastung bei Entnahme des Werkzeuges (3) durch die Bewegung des Werkzeugs selbsttätig wieder aufgehoben wird.

2. Zahnärztliches Handstück nach Anspruch 1 **dadurch gekennzeichnet, daß** das Haltemittel (6) in der Aufnahmehülse (7) gehaltert ist.

3. Zahnärztliches Handstück nach Ansprüche 1 oder 2, **dadurch gekennzeichnet,, daß** ein haarnadelförmig ausgebildetes Haltemittel (6) vorgesehen ist, wobei die beiden freien Enden die Halteelemente (6b, 6c) bilden.

4. Zahnärztliches Handstück nach einem der Ansprüche 1 bis, 3, **dadurch gekennzeichnet, daß** das Haltemittel (6) aus einem Federdraht mit vorzugsweise rundem Querschnitt gebildet ist.

5. Zahnärztiches Handstück nach einem der Ansprüche 1 bis 4, **dadurch gekennzeichnet, daß** das Haltemittel (6) einteilig ausgebildet ist.

6. Zahnärztliches Handstück nach Anspruch 3, **dadurch gekennzeichnet , daß** das Haltemittel (6) abgewinkelt und mit dem bügelseitigen Ende (6a) im Werkzeugaufnahmekopf (2) gefaßt ist.

7. Zahnärztliches Handstück nach Anspruch 6, **dadurch gekennzeichnet , daß** das bügelseitige Ende (6a) durch einen im Werkzeugaufnahmekopf (2) angeordneten und den Bügel durchquerenden Stift (11) gesichert ist.

8. Zahnärztliches Handstück nach einem der Ansprüche 1 bis 7, **dadurch gekennzeichnet, daß** das Haltemittel (6) dem mit einem Ringbund (5) versehenen Werkzeugschaft (4) angepaßt ist.

9. Zahnärztliches Handstück nach Anspruch 8, **dadurch gekennzeichnet, daß** Ringbund (5) und/oder Schaft (4) mit Positionierflächen versehen sind.

10. Zahnärztliches Handstück mit einem im Kopfgehäuse ausgeordneten Antrieb (8, 9) mit dem die Aufnahmehülse (7) in eine Schlagbewegung versetzbar ist, nach Ansprüch 1, **dadurch gekennzeichnet, daß** das Haltemittel (6) außen am Kopfgehäuse (2) des Handstückes in einer entsprechend ausgebildeten Ausnehmung (10), eingesetzt ist.

## Claims

1. Dental handpiece with a tool holder head (2) which contains a device for mounting and axially securing a tool (3) in a receiving sleeve (7) of the tool holder head (2), the tool (3) having a shank (4) which, facing towards the insertion opening (12) of the receiving sleeve (7), is provided on the circumference with a radial elevation (5) or depression and the device having a first retaining means (7, 12) for the force fit of the shank (4) in the tool holder head (2) in order to execute the intended movement, and having, near the insertion opening (12), a second retaining means (6) for securing the tool (3) against axial sliding-off from the tool holder head (2), the second retaining means (6) comprising at least two resilient retaining elements (6b, 6c) which are arranged spaced apart from one another and whose spacing (x) is dimensioned so that the tool shank (4) can be guided in between them and can be pushed into the receiving sleeve (7), the elasticity of the retaining elements (6b, 6c) being such that, when the tool shank (4) is being pushed in, they can widen open until the tool shank (4), in the inserted state, is locked with the retaining elements (6b, 6c) behind the radial elevation (5) or in the depression, **characterized in that** the force fit with the receiving sleeve (7) is produced, and **in that** the elasticity of the retaining elements (6b, 6c) is such that, upon removal of the tool (3), the locking is cancelled again automatically by the movement of the tool.

2. Dental handpiece according to Claim 1, **characterized in that** the retaining means (6) is mounted in the receiving sleeve (7).

3. Dental handpiece according to Claims 1 or 2, **characterized in that** a retaining means (6) designed in the shape of a hairpin is provided, the two free ends forming the retaining elements (6b, 6c).

4. Dental handpiece according to one of Claims 1 to 3, **characterized in that** the retaining means (6) is made from a spring wire of preferably round cross section.

5. Dental handpiece according to one of Claims 1 to 4, **characterized in that** the retaining means (6) is made in one piece.

6. Dental handpiece according to Claim 3, **characterized in that** the retaining means (6) is bent at an angle and is gripped in the tool holder head (2) via the bow-side end (6a).

7. Dental handpiece according to Claim 6, **characterized in that** the bow-side end (6a) is secured by a pin (11) which is arranged in the tool holder head (2) and which passes through the bow.

8. Dental handpiece according to one of Claims 1 to 7, **characterized in that** the retaining means (6) is adapted to the tool shank (4) provided with an annular collar (5).

9. Dental handpiece according to Claim 8, **characterized in that** annular collar (5) and/or shank (4) are provided with positioning areas.

10. Dental handpiece according to claim 1 with a drive mechanism (8, 9) which is arranged in the head housing (2) and with which the receiving sleeve (7) can be moved in a percussion movement, **characterized in that** the retaining means (6) is fitted on the outside of the head housing (2) of the handpiece in a correspondingly shaped recess (10).

## Revendications

1. Pièce à main de dentisterie, comportant une tête de réception d'outil (2), qui comporte un dispositif destiné à maintenir et à immobiliser axialement un outil (3) dans un manchon de réception (7) de la tête de réception d'outil (2), dans lequel
l'outil (3) comporte une tige (4) qui est dotée d'une saillie ou d'un évidement radial en périphérie et en direction de l'ouverture d'introduction (12) du manchon de réception (7), et
le dispositif comporte un premier moyen de retenue (7, 12) pour la liaison à coopération de force de la tige (4) dans la tête de réception d'outil (2) en vue de réaliser le mouvement envisagé et comporte à proximité de l'ouverture d'introduction (12) un deuxième moyen de retenue (6) destiné à immobiliser l'outil (3) pour l'empêcher de glisser axialement de la tête de réception d'outil (2),
le deuxième, moyen de retenue (6) comporte au moins deux éléments de retenue (6b, 6c) élastiques et disposés à distance l'un de l'autre dont l'écartement (x) est tel que la tige d'outil (4) peut être insérée entre lesdits éléments de retenue et introduite dans le manchon de réception (7),
l'élasticité des éléments de retenue (6b, 6c) est telle que ceux-ci peuvent être écartés lors de l'introduction de la tige d'outil (4) jusqu'à ce que la tige d'outil (4) s'enclenche une fois introduite avec les éléments de retenue (6b, 6c) en arrière de la saillie radiale (5) ou dans l'évidement,
**caractérisée en ce que** la liaison à coopération de force est réalisée avec le manchon de réception (7) et **en ce que** l'élasticité des éléments de retenue (6b, 6c) est telle que, lorsque l'on retire l'outil (3), l'enclenchement est de nouveau supprimé automatiquement par le déplacement de l'outil.

2. Pièce à main de dentisterie, selon la revendication 1, **caractérisée en ce que** le moyen de retenue (6) est maintenu dans le manchon de réception (7).

3. Pièce à main de dentisterie, selon la revendication 1 ou 2, **caractérisée en ce qu'**il est prévu un moyen de retenue (6) conformé en épingle à cheveux dont les deux extrémités libres forment les éléments de retenue (6b, 6c).

4. Pièce à main de dentisterie, selon l'une des revendications 1 à 3, **caractérisée en ce que** le moyen de retenue (6) est formé par un fil d'acier pour ressort ayant de préférence une section circulaire.

5. Pièce à main de dentisterie selon l'une des revendications 1 à 4, **caractérisée en ce que** le moyen de retenue (6) est conformé en une seule pièce.

6. Pièce à main de dentisterie selon la revendication 3, **caractérisés en ce que** le moyen de retenue (6) est coudé et est enchassé dans la tête de réception d'outils (2) à l'extrémité du côté (6a) de l'étrier.

7. Pièce à main de dentisterie, selon la revendication 6, **caractérisée en ce que** l'extrémité (6a) de l'étrier est immobilisé par une goupille (11) disposée dans la tête de réception d'outil (2) et traversant l'étrier.

8. Pièce à main de dentisterie, selon l'une des revendications 1 à 7, **caractérisée en ce que** le moyen de retenue (6) est adapté à la tige d'outil (4) doté d'un collet annulaire (5).

9. Pièce à main de dentisterie, selon la revendication 8, **caractérisée en ce que** le collet annulaire (5) et la tige (4) sont dotés de surfaces de positionnement.

10. Pièce à main de dentisterie, selon la revendication 1, comportant un dispositif d'entraînement (8, 9), disposé dans le boîtier de tête, au moyen duquel le manchon de réception (7) peut être mis en un mouvement brusque, **caractérisée en ce que** le moyen de retenue (6) est inséré à l'extérieur au niveau du boîtier de tête (2) de la pièce à main dans un creux (10) conformé de façon correspondante.
